# EUROPEAN PATENT APPLICATION

(11) **EP 4 746 353 A1**
(43) Date of publication of application: **20.05.2026**
(21) Application number: 25214400.1
(22) Date of filing: 07.11.2025
(51) Int. Cl.: H04L 9/40

(54) **ZERO TRUST NETWORK BRANCH**

(30) Priority: 15.11.2024 US 202418948775
(71) Applicant: Zscaler, Inc., San Jose, CA 95134 (US)
(72) Inventor: AGRAWAL, Ritesh R., San Jose, CA, 95134 (US); ADAVI, Vinay, San Jose, CA, 95134 (US); MOHAN, Satish M., San Jose, CA, 95134 (US)
(74) Representative: Dehns

(57) **Abstract**

A system and method for a zero-trust (ZT) branch network (12) include an edge switch (30) on-premises and a cloud system (40) configured to perform centralized security processing (150). Each endpoint (24) in the branch network (12) is isolated at Layer 2, for example by a /32 subnet configuration, and all east-west and north-south traffic flows (50) are routed via the edge switch (30) through the cloud system (40). The cloud system (40) executes one or more selectable security applications (48), such as Secure Service Edge (SSE), Network Access Control (NAC), Domain Name System/Dynamic Host Configuration Protocol/Internet Protocol Address Management (DDI), and Network Detection and Response (NDR). Traffic between endpoints (24) is encapsulated in Layer 3 tunnels (60), such as VXLAN encrypted with MACsec, ensuring complete inspection and control without on-premises firewalls while preventing lateral threat movement in the branch network (12).

## Description

### FIELD OF THE DISCLOSURE

The present disclosure generally relates to computer networking systems and methods. More particularly, the present disclosure relates to systems and methods for a zero trust (ZT) network branch, which includes an edge switch on premises (on prem) with other services being offered in the cloud.

### BACKGROUND OF THE DISCLOSURE

Branch offices are remote extensions of a company's main office, established to serve specific regions or functions while staying connected to the central network. These sites often have local staff and resources but require robust network connections to headquarters for seamless data access and communication. Before Secure Service Edge (SSE), branch offices relied on traditional perimeter security models, sending all network traffic through centralized data centers for inspection by secure web gateways (SWG), firewalls, and other appliances. This approach led to latency, inefficient routing, and extensive information technology (IT) management, especially as cloud services became essential to workflows. SSE now addresses these issues by enabling branch offices and other remote users to connect directly and securely to cloud resources through a suite of integrated security services, including SWG, cloud access security brokers (CASB), zero-trust network access (ZTNA), and the like. However, while SSE optimizes security for cloud and internet-based traffic, it has limitations when managing local network traffic within a branch network. Local network traffic, essential for devices communicating within the same local area network (LAN), falls outside the scope of SSE, which focuses on clouddelivered security at higher layers of the OSI model. This means that SSE lacks visibility and control over local branch network traffic, such as device-to-device communications and broadcasts within the LAN, which still require traditional network infrastructure and security solutions like virtual LANs (VLANs), switches, and local firewalls to manage effectively.

### BRIEF SUMMARY OF THE DISCLOSURE

This disclosure describes a zero-trust (ZT) network branch approach that uses a minimally featured edge switch on-premises, with all additional security services hosted in the cloud. Designed to simplify network security, this setup uses only an edge switch to route traffic flows securely through cloud-based services, such as detailed in the parent application, U.S. Patent No. 11,171,985. By eliminating on-prem firewalls for north-south and east-west traffic, Complex Ethernet switches, routers, NAC, and other security appliances and services on-prem, this model prevents lateral threat movement, removes complex on-prem equipment, allows onetouch deployment, and enhances uptime. Additionally, a cloud-based application store enables flexible, on-demand addition and removal of security services.

### BRIEF DESCRIPTION OF THE DRAWINGS

The present disclosure is illustrated with various drawings, where consistent reference numbers denote corresponding system components or method steps, as appropriate, throughout the drawings:
FIG. 1 illustrates a conceptual diagram of security functions in a conventional branch network and a simplified branch network in accordance with the present disclosure.
FIG. 2 illustrates the evolution of security services showing a pre-SSE network branch, a current network branch, and a simplified network branch in accordance with the present disclosure.
FIG. 3 illustrates a network diagram of a network with the cloud connected to an example simplified branch network, via an edge switch.
FIG. 4 illustrates a network diagram of the network of FIG. 3 illustrating example traffic flows.
FIG. 5 illustrates a network diagram with Intra-LAN traffic in a conventional VLAN network.
FIG. 6 illustrates a diagram of a security appliance to provide protection from lateral movement of ransomware in accordance with an implementation.
FIG. 7 illustrates a block diagram of components of a security appliance in accordance with an implementation.
FIG. 8 illustrates the security appliance set as the default gateway in accordance with an implementation.
FIG. 9 illustrates how a security appliance may quarantine a compromised endpoint in accordance with an implementation.
FIG. 10 illustrates how the security appliance may detect compromised endpoints attempting to circumvent the security appliance in accordance with an implementation.
FIG. 11 illustrates a flowchart of a method in accordance with an implementation.
FIG. 12 illustrates a block diagram of an example implementation of an edge switch.
FIG. 13 illustrates a block diagram of an example processing device.

### DETAILED DESCRIPTION OF THE DISCLOSURE

Again, the present disclosure relates to systems and methods for a zero trust (ZT) network branch, which includes an edge switch on premises (on prem) with other services being offered in the cloud.

### Network Branches

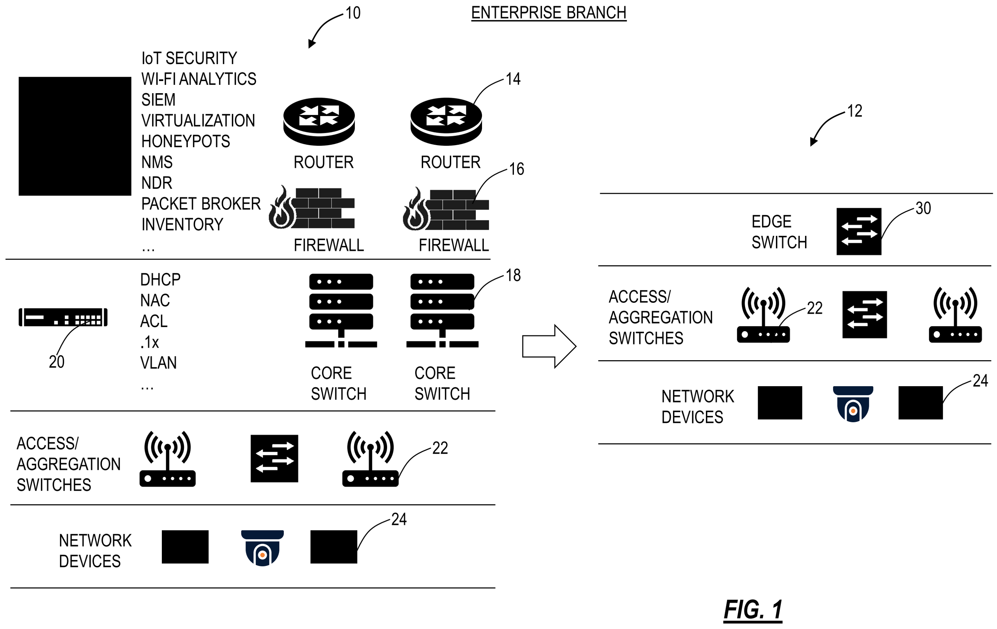

FIG. 1 illustrates a conceptual diagram of security functions in a conventional branch network 10 and a simplified branch network 12 in accordance with the present disclosure. A branch network, also called a remote office network or satellite office network, connects smaller locations like regional offices or retail sites to an organization's main network infrastructure. In the conventional branch network 10, the network 10 relies on hardware such as routers 14, firewalls 16, and Ethernet switches 18 to manage network traffic and enforce security. They may also include specialized equipment, such as network appliances 20 and Wi-Fi access points 22. Ultimately, the network branch 10 provides secure network connectivity for network devices 24 or endpoints.

The branch network 10 may support SSE or secure access service edge (SASE). However, while SSE and SASE centralize security, the branch network 10 still requires on-premises appliances for full functionality and security. Local devices, such as Ethernet switches, Wi-Fi controllers, and firewalls, are essential for managing internal traffic, device-level security, and specialized local services like Internet-of-Things (IoT) security, Network Management Systems (NMS), and Wi-Fi analytics. These on-prem devices provide granular control over east-west traffic within the branch network 10, support fast local data handling, and ensure redundancy if cloud connectivity is interrupted.

The routers 14 and firewalls 16 in branch offices have become multifunctional devices, supporting a wide range of security, analytics, and network management features. For instance, loT security is managed through integrated tools that identify, monitor, and protect connected devices, while Wi-Fi analytics offers insights into user behaviors for network optimization. Security information and event management (SIEM) integrates with the routers 14 and the firewalls 16 to centralize event data for real-time threat detection. Virtualization in these devices enables them to run multiple services simultaneously, improving flexibility and resource efficiency. Additionally, honeypots can attract and analyze threats, network detection and response (NDR) tools monitor traffic for suspicious activities, and packet brokers enhance data flow visibility and efficiency. Inventory management is often integrated to track connected devices, ensuring up-to-date security profiles across the branch network 10. Together, these capabilities allow the routers 14 and the firewalls 16 to provide comprehensive network and security services, consolidating functions that previously required multiple dedicated appliances within the branch network 10.

The core Ethernet switches 18 support several essential protocols and services for secure and efficient network operations. DHCP (Dynamic Host Configuration Protocol) assigns IP addresses to devices automatically, streamlining setup and avoiding conflicts. Network Access Control (NAC) enforces security by verifying devices meet certain policies before gaining network access. Access Control Lists (ACLs) add security by defining traffic rules, controlling which data can pass based on parameters like IP or port. 802.1x provides authentication for connected devices, ensuring only authorized users access the network. VLANs (Virtual Local Area Networks) segment the network into isolated sections, enhancing performance and security by separating different traffic types, such as guest and employee networks. Together, these elements provide structured, secure, and scalable network management within the branch network 10.

Thus, while some security functions can be moved to the cloud in the branch network 10, there are still a need to support various local functions with the routers 14, the firewalls 16, and the core Ethernet switches 18. As such, the present disclosure contemplates the simplified network branch 12 which includes one or more edge switches 30 on prem, which are edge switches connected to a cloud system which supports various security services to replace all of the functions on prem in the conventional branch office 10, with the routers 14, the firewalls 16, and the core Ethernet switches 18.

### Evolution

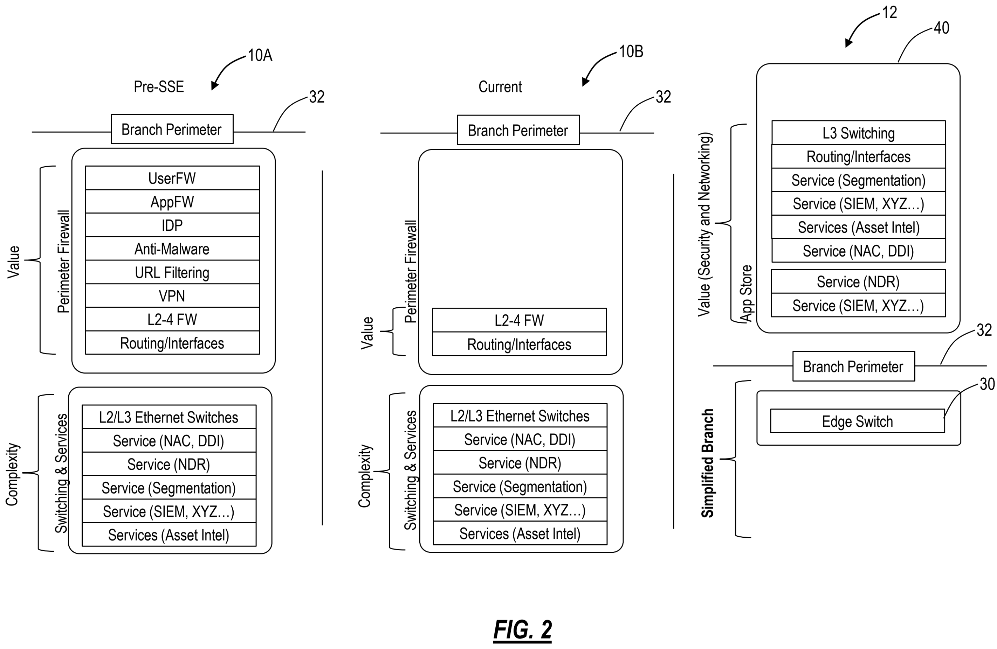

FIG. 2 illustrates the evolution of security services showing a pre-SSE network branch 10A, a current network branch 10B, and a simplified network branch 12 in accordance with the present disclosure. Each of the branches 10A, 10B, 12 include a branch perimeter 32 which is the boundary where the internal branch network 10A, 10B, 12 connects to external networks, such as the internet or other organizational networks. The branch networks 10A, 10B include the firewalls 16, routers 14, and sometimes dedicated security appliances, which act as the first line of defense against outside threats. This perimeter 32 monitors and controls traffic entering and leaving the branch network 10A, 10B, 12, enforcing security policies to prevent unauthorized access. By filtering and inspecting traffic at this boundary, the network perimeter 32 protects internal devices and data from external cyber threats while managing outbound connections securely.

Before the advent of SSE, branch networks like the network 10A relied on comprehensive on-premises security for protecting their perimeter and internal operations. Key perimeter security functions included firewalls-both for general network protection and for specific users and applications-an identity platform for user verification, anti-malware solutions, URL filtering, and virtual private network (VPN) connectivity. These perimeter firewalls spanned multiple layers, from Layer 2 (Data Link) to Layer 4 (Transport), ensuring both internal routing and secure interfaces. Beyond perimeter security, branch networks include Layer 2/Layer 3 Ethernet switches for internal connectivity, and services such as NAC and DDI (domain name system (DNS), DHCP, and IP Address Management) for managing device access and addressing. NDR tools monitored traffic for suspicious activities, while segmentation services isolated traffic by creating secure, separate zones within the network. SIEM systems also centralized security data for analysis, providing real-time insights to detect and respond to threats. This on-prem setup required complex equipment and management to secure both internal communications and external network access.

With the branch network 10B, SSE shifts many traditional branch network security functions to the cloud, centralizing and streamlining security management. By moving core functions to the cloud, SSE offloads the need for physical on-premises firewalls for applications, users, and identity management. Anti-malware, URL filtering, and VPN services are also delivered through cloud-based solutions, reducing reliance on local hardware, and simplifying infrastructure by securing network traffic at the cloud level. SSE further replaces some Layer 2 to Layer 4 firewall needs with cloud-based inspection, addressing both internal (east-west) and external (north-south) traffic. Traditional tools like NAC, NDR, and segmentation services, previously managed on-site, can now integrate with cloud services, reducing equipment and providing consistent security policies across branches. By centralizing these functions, SSE enhances security while minimizing physical infrastructure and operational complexity in branch offices.

With the present disclosure, the branch network 12 includes the edge switch 30 behind the network perimeter 32, along with the other functions being performed in a cloud 40. Specifically, the complex switching and services in the network branch 10B are offloaded to cloud services, e.g., "apps" which can be selectively added. Here, the L3 switching, routing/interfaces, segmentations services, SIEM services, asset services, NAC/DDI services, etc. can be included as apps or virtual network functions (VNFs) in the cloud 40.

### Network-less secure branch network

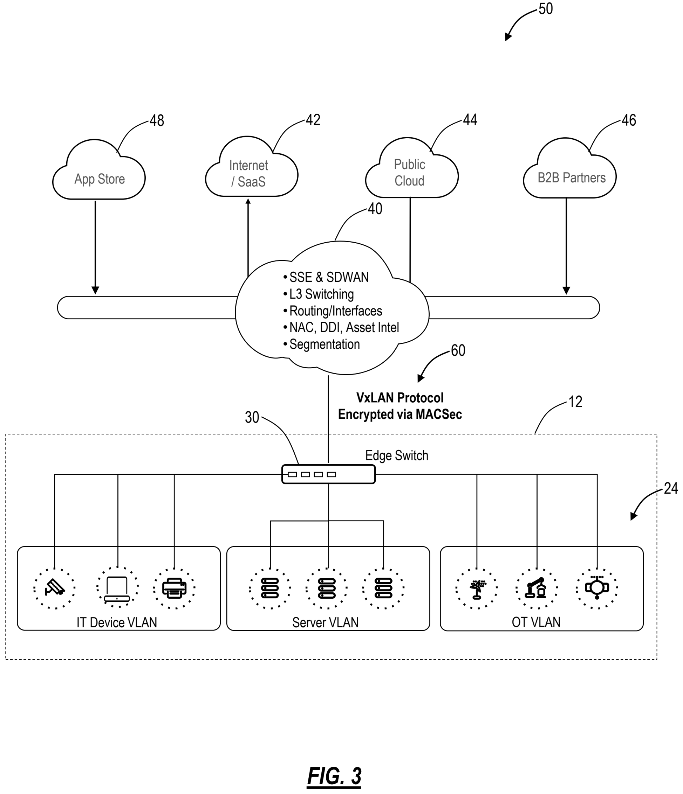

FIG. 3 illustrates a network diagram of a network 50 with the cloud 40 connected to an example simplified branch network 12, via an edge switch 30. In particular, the network 50 shows a single branch network 12 and those skilled in the art will recognize there can be a large number of different branch networks 12, all connected to the cloud 40 for security service processing. The cloud 40 is a cloud-native security platform that implements zero-trust principles by dynamically managing secure connections between users, devices, and applications. Instead of routing traffic through traditional network perimeter defenses, the cloud 40 securely brokers connections directly between authenticated users and authorized applications based on granular, context-aware policies. It inspects every connection in real-time for security compliance, enforcing strict identity and access management (IAM) controls while scanning for potential threats. This approach prevents lateral movement by isolating applications and users, minimizing attack surfaces and eliminating the need for VPNs. By using a distributed network of global data centers, the cloud 40 ensures that security and performance remain consistent, regardless of user location, while reducing latency and enabling scalable, cloud-native protection across an organization's infrastructure. For example, the cloud 40 can be the Zero Trust Exchange (ZTE) available from Zscaler, Inc.

The cloud 40 supports a cloud security service that combines SSE/SASE and software-defined wide area network (SD-WAN) capabilities for a broad range of network and security functionalities for branch networks. SSE/SASE can be a component in the cloud 40, so not only is the branch network 12 simplified, but it also retains the benefits from SSE/SASE. Ethernet switching such as L2 and L3 switching and routing are managed in the cloud, enabling seamless traffic segmentation across different VLANs, with centralized interfaces to optimize connectivity between branches and cloud applications. NAC policies are enforced in the cloud, restricting access based on identity, while DDI simplifies IP allocation and secures DNS. Asset intelligence provides real-time device profiling and tracking, ensuring visibility and compliance. Cloud-based microsegmentation isolates traffic between endpoints, workloads, or user roles, preventing lateral movement without the need for traditional on-prem segmentation. Altogether, this integration of SSE and SD-WAN offers centralized, consistent security management, reducing the need for on-prem appliances and enhancing security across distributed networks.

The cloud 40 is inline, i.e., between, the branch network 12 and the Internet 42 as well as software-as-a-service (SaaS), public clouds 44, business partners 46, and an app store 48. Logically, the cloud 40 can be viewed as an overlay network between the branch network 12 and the Internet 42, the public clouds 44, and the business partners 46. The cloud 40 is replacing the conventional deployment model in the branch networks 10A, 10B. The cloud 40 can be used to implement security services, such as, but not limited to SSE/SASE, without requiring the physical devices and management thereof by enterprise IT administrators. As an ever-present overlay network, the cloud 40 can provide the same functions as the physical devices and/or appliances, as well as independent of platform, operating system, network access technique, network access provider, etc.

The app store 48 for cloud services is a centralized marketplace where IT administrators can browse, purchase, deploy, and manage a wide variety of cloud applications and services. Similar to consumer app stores, it provides a streamlined interface for accessing security tools, productivity apps, network services, and data analytics. The app store allows IT administrators to quickly add or remove security services as needed, scaling capabilities without requiring on-premises installations. With integrated billing, licensing, and support, it simplifies cloud service management and accelerates deployment, helping organizations respond dynamically to changing needs.

The branch network 12 includes the edge switch 30 which includes an interface 60 to the cloud 40 to route all traffic therethrough. The edge switch 30 is located at the branch perimeter 32, connecting to a WAN, i.e., to the cloud 40. The edge switch 30 creates Layer 3 tunnels to the cloud 40. The interface 60 can use virtual extensible LAN (VXLAN) protocol encrypted via media access control secure (MACSec) to create a secure, scalable Layer 2 overlay network by encapsulating Ethernet frames for transmission across Layer 3 infrastructure. VXLAN enables extended network segmentation over large geographic distances, making it ideal for connecting the branch network 12 to the cloud 40. When secured with MACSec, VXLAN traffic is encrypted at the Ethernet layer, ensuring confidentiality, integrity, and protection from interception. MACSec encrypts the VXLAN frames, protecting data as it traverses potentially insecure networks, which enhances security without compromising performance.

The branch network 12 includes endpoint devices 24, such as IT devices (user devices), server devices, operational technology (OT) devices, and the like. The endpoint devices 24 are effectively in a network of one with the interface 60, through the interface 60 to the cloud 40. In VXLAN, VLANs are transmitted over a Layer 3 network by encapsulating Layer 2 Ethernet frames within VXLAN headers. essentially extending the VLAN structure across a large, geographically dispersed network. Those skilled in the art will recognize there can be other approaches for traffic connectivity between the branch network 12 and the cloud 40, e.g., more than one VXLAN tunnel between the branch network 12 and the cloud 40, such as one VXLAN tunnel per VLAN or even one VXLAN tunnel per endpoint 24.

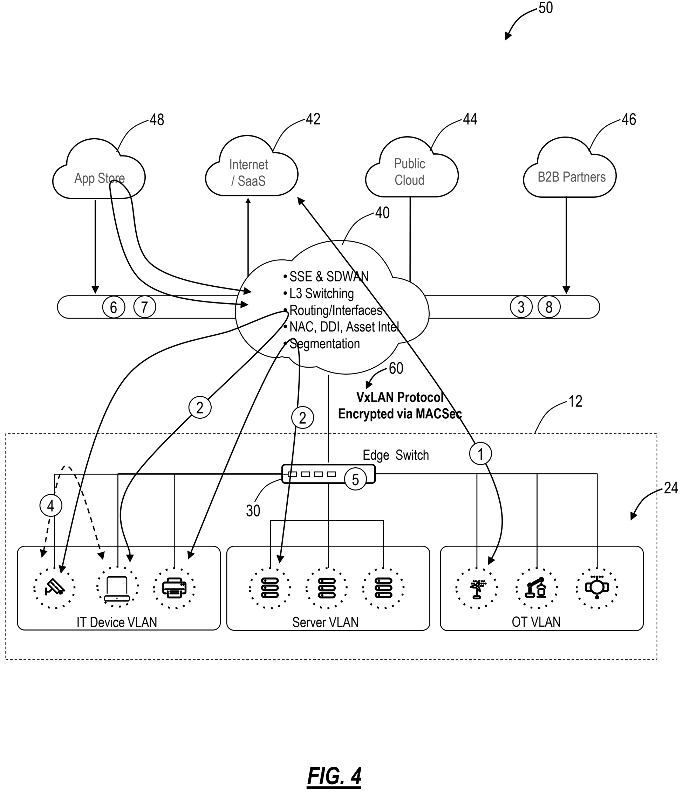

FIG. 4 illustrates a network diagram of the network 50 illustrating example traffic flows. In particular, flows are illustrated in FIG. 4. The network 50 includes East-West (E-W) and North-South (N-S) flows describe traffic directions and patterns, often differentiated by Layer 2 (L2) and Layer 3 (L3) behaviors. L3 North-South flows refer to traffic moving in and out of the network 12, such as communication between internal devices and external networks (e.g., internet-bound traffic). L3 East-West flows represent traffic between devices within the same network segment or data center, passing through routers or Layer 3 switches. Conversely, L2 East-West flows occur within the same subnet or VLAN, allowing direct communication between devices at the Data Link layer without Layer 3 intervention.

In the branch network 12:
(1) for flows 1, N-S L3 traffic flows remain unchanged, between the endpoint devices 24, through the switch 30, and the cloud 40 to the Internet 42.
(2) for flows 2, all E-W L3 traffic flows are through the cloud 40.
(3) for flows 3, L3 broadcast and multicast flows are through the cloud 40.
(4) for flows 4, Inter-VLAN L2 BUM (Broadcast, Unknown Unicast, and Multicast) traffic stays in the branch network 12. Inter-VLAN L2 BUM traffic includes broadcast messages, unknown unicast frames (sent when the destination MAC is unknown), and multicast traffic within and between VLANs. In traditional Layer 2 networks, BUM traffic is forwarded to all devices within a VLAN, but inter-VLAN BUM traffic requires handling across VLANs. VXLAN or VLAN-aware routers/switches manage inter-VLAN BUM traffic by encapsulating or routing it, reducing unnecessary broadcast domains, and controlling traffic flow across VLAN boundaries for better scalability and efficiency.
(5) for flow 5, L2 security services are configured on the switch 30.
(6) for services 6, L3 services are deployed (one touch) in the cloud 40.
(7) the services can be routed/service chained in the cloud 40.
(8) the services can include hooks for network management, troubleshooting, and visibility.

### A network of one

In an embodiment, in addition to routing Layer 3 traffic through the cloud 40, the branch network 12 includes isolation of each endpoint 24 from one another at Layer 2. Various techniques can be used for isolation at Layer 2 including having each endpoint 24 in its own VLAN or VXLAN. VLANs (Virtual Local Area Networks) and VXLANs (Virtual Extensible LANs) are two techniques used to isolate endpoints in a Layer 2 network. VLANs partition a network into multiple broadcast domains, each behaving like a separate network, which prevents direct communication between endpoints in different VLANs without a Layer 3 device like a router or firewall. This is a straightforward approach but is limited to 4094 VLANs, making it ideal for smaller environments. VXLAN, on the other hand, extends this capability by allowing up to 16 million isolated segments through a 24-bit identifier and encapsulates traffic for routing over a Layer 3 network. This makes VXLAN highly scalable and suitable for large, modern data centers or cloud environments where extensive endpoint isolation is needed. While VLANs are simpler and sufficient for smaller networks, VXLAN offers more flexibility and scalability for complex, virtualized infrastructures. However, VXLAN configured down to each endpoint creates complexity of managing large number of VXLANs down to each endpoint i.e. each switch needs to support VXLAN creating cost and complexity concerns. The VLAN approach is complex and has a limitation of around 4000 VLANs-which can be problematic in branch network 12 which may have more than 4000 endpoints 24. The VXLAN approach is also complex, but removes the 4000-endpoint limitation.

The present disclosure suggests the use of a subnet mask to isolate the endpoints 24 instead of traditional approaches. This method of creating narrow subnet mask eliminates the cost and complexity concerns associated with VLAN an VxLAN based solutions. For example, the branch network 12 can use virtual point-to-point links described in the parent application. The virtual point-to-point links function by establishing a secure, forced path from each endpoint 24 to the switch 30, effectively isolating endpoint devices 24 within the VLAN. This is achieved by configuring each endpoint with a unique subnet mask of 255.255.255.255, creating a /32 Classless Inter-Domain Routing (CIDR) configuration where each device perceives itself as the sole device in its subnet. Consequently, intra-LAN traffic between endpoints (i.e., East-West traffic) is routed solely through the switch 30 through the cloud 40.

In the branch network 12 where each endpoint 24 is assigned a unique subnet mask of 255.255.255.255 (a /32 CIDR configuration), every endpoint 24 effectively perceives itself as the only device within its subnet. This configuration isolates each endpoint 24, meaning it cannot communicate directly with others at the Layer 2 level. All communication between endpoint 24 must go through the switch 30, which then controls and monitors traffic through the cloud 40. This setup enhances security by limiting direct device-to-device communication and enforcing strict access control through the gateway. This setup also allows network teams to maintain their preconfigured VLANs and VXLANs thereby avoiding any impact to their configuration and policies.

In this architecture, a security appliance that is deployed in the cloud 40, operates as the network's default gateway , dynamically assigning IP addresses to each endpoint 24 with the specified /32 mask. This setup ensures that all communications must pass through the appliance 150 (or through the cloud 40), granting it comprehensive control and monitoring capabilities over inter-VLAN and intra-VLAN traffic. By requiring endpoints 24 to route through the appliance, the solution enables strict traffic inspection, detection of suspicious patterns, and prompt isolation of compromised devices if ransomware-like behaviors are identified.

In the parent application, the appliance itself is positioned on either an access or trunk port, with trunk ports being particularly advantageous when multiple VLANs need centralized monitoring and control. However, with the branch network 12 and simplification thereof, the appliance 150 is another service in the cloud 40. The appliance manages message traffic for each endpoint by deploying key security modules, including an inter-VLAN and intra-LAN traffic monitoring unit, an authorization unit, and a ransomware attribute detection unit. Together, these components work to analyze and authorize inter-VLAN and intra-VLAN communications, identify unauthorized or anomalous traffic patterns, and profile typical traffic baselines for each endpoint. This configuration provides continuous surveillance, allowing for the rapid quarantine of compromised endpoints to prevent ransomware from spreading within or across the VLANs, thus securing East-West traffic in shared network environments.

### Virtual point-to-point links

As described in the parent application, ransomware is one of the biggest threats facing the security industry today. Ransomware is a form of malware that infects computer systems. Ransomware is becoming an increasing problem in the computer/network security industry. Ransomware infects a computer system and encrypts files. A ransom is demanded in exchange for a decryption key. Firewalls provide inadequate protection against ransomware attacks. In some companies, separate VLANs are used to segment sections of a company by division as an additional layer of protection. For example, a finance department may have a separate VLAN domain than an engineering department. Or a finance department may have a different VLAN domain than a marketing department. However, this sort of segmentation of VLAN domains by departments does not address the problem of lateral movement of Ransomware attacks within a VLAN domain.

One of the reasons for the inadequacy of current enterprise security solutions is the difficulty of protecting against ransomware attacks within a shared VLAN based network architecture. If a device that is part of a shared VLAN broadcast domain is infected by ransomware or malware, there are very few security controls that can be implemented to prevent lateral propagation of the ransomware within the same VLAN network.

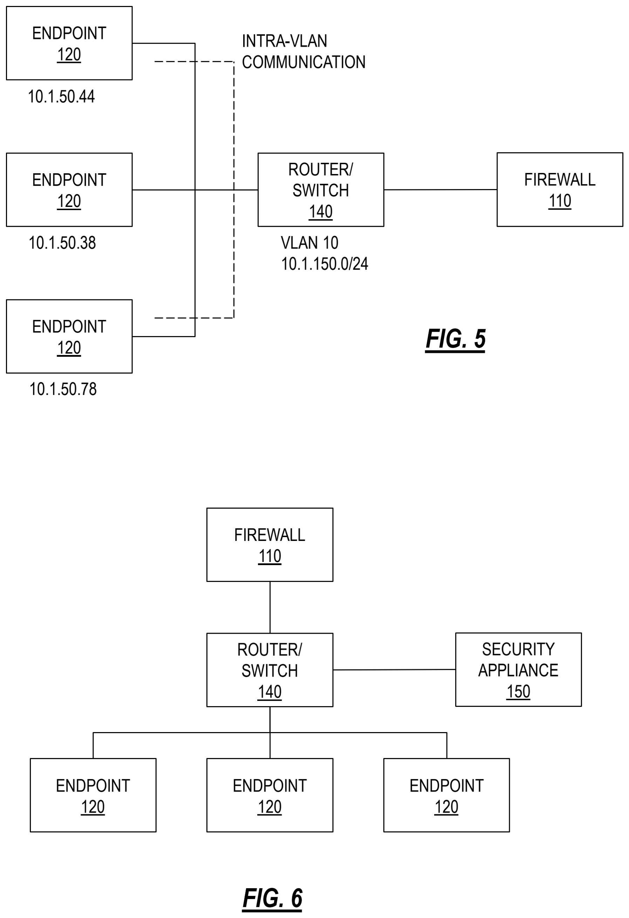

FIG. 5 illustrates a network diagram with Intra-LAN traffic in a conventional VLAN network. An optional firewall 110 provides some limited protection against external ransomware attacks. However, a VLAN network also has east-west communication between endpoint devices 120 in a shared VLAN domain that is forwarded directly by the network router/switch 140. This east-west Intra-LAN communication is not visible to the network firewall 110 deployed up-stream on the network. Current security solutions for lateral propagation protection of ransomware are based on endpoint protection. The drawback of these approaches is that it relies on an agent deployed on each endpoint 120 to detect malicious ransomware processes being launched. Deploying and managing these agents is a challenge for IT organizations, and furthermore they cannot be deployed on loT devices (such as web cameras, printers, and other devices) and are frequently not supported on older versions of operating systems.

Conventional VLAN network architectures have a potential gap in protection associated with lateral movement of ransomware between endpoint devices. Software application on the endpoints 120 provides only limited protection due to a variety of practical problems in managing software apps on endpoint devices and the presence of other loT devices at endpoint devices, such as web cameras, printers, etc. There is thus a potential for ransomware to enter the VLAN network and laterally propagate to endpoint devices.

A technique to detect lateral propagation of ransomware between endpoints 120 in a VLAN is disclosed. In one implementation, a smart appliance is deployed in an access port or a trunk port of VLAN network. The smart appliance is set as the default gateway for intra-LAN communication for two or more endpoint devices. Message traffic from compromised endpoints is detected. Additional measures may also be taken to generate alerts or quarantine compromised end point devices.

An example of a computer-implemented method of ransomware protection in a Virtual Local Area Network (VLAN) includes deploying a security appliance in an access or a trunk port of a shared VLAN environment. A subnet mask of 255.255.255.255 is used to set the security appliance as a default gateway for a plurality of endpoint devices of the shared VLAN environment. The security appliance monitors intra-VLAN communication between the plurality of endpoint devices of the shared VLAN environment. The security appliance detects lateral propagation of ransomware between endpoint devices via intra-VLAN communication in the shared VLAN environment.

FIG. 6 illustrates a diagram of a security appliance to provide protection from lateral movement of ransomware in accordance with an implementation. The operation of a network router/switch 140 is augmented and enhanced with a security appliance 150. The security appliance 150 could be implemented in a variety of ways, such as using a mixture of hardware and software, firmware, etc. However, in one implementation it is implemented as software that may, for example, be stored on a memory and executed on a computer processor associated with a computing device such as the router/switch 140. In one implementation, it may be deployed on an existing port (e.g., an access port or a trunk port) of the VLAN network. As an illustrative example, the security application 150 may be implemented as software compatible with a virtual machine (VM) implementation, such as within a hypervisor implementation in VMware. The security appliance 150 may be deployed on a port that allows the security appliance 150 to monitor and control the flow of message traffic across a network node for a plurality of endpoint devices 120 with an individual VLAN domain or even across multiple VLAN domains. Deploying the security appliance 150 on a trunk port is advantageous because a trunk port is a specific type of port on a network switch that allows data to flow across a network node for multiple virtual local area networks or VLANs. However, the security appliance 150 could alternatively be deployed on an access port. In an embodiment, the switch 30 can be the router/switch 140.

In one implementation, virtual point-to-point links between the security appliance 150 and each endpoint 120 are established in a shared VLAN domain that forces all traffic from an endpoint 120 to traverse the security appliance 150. In one implementation, the security appliance 150 is deployed on an access port or a trunk port on an existing router or switch 140, 30.

In one implementation, the security appliance 150 becomes the default gateway and the DHCP server responsible for dynamically assigning an IP address and other network configuration parameters to each endpoint device 120 on the network so that they communicate with each other in the existing VLAN network.

When an individual endpoint 120 requests an IP address, the security appliance 150 responds back with an IP address and a subnet mask that sets the security appliance 150 as the default gateway for the endpoint 120. In one implementation, the security appliance 150 responds with a subnet including all ones - 255.255.255.255-that sets itself as the default gateway for the endpoint 120. Since the endpoint 120 receives an IP address with a subnet mask of 255.255.255.255, any network communication with other endpoints 120 or internet applications needs to be routed via the default gateway. In other words, a network with a subnet mask of 255.255.255.255 puts each device inside its own subnet, which forces them to communicate with the default gateway before communicating with any other device. The 255.255.255.255 subnet mask may also be referred to by the CIDR prefix /32, which has one IP address. The CIDR number comes from the number of ones in the subnet mask when converted to binary. The 255.255.255.255 subnet mask corresponds to a CIDR prefix of /32.

Since the security appliance 150 sets itself as the default gateway for the network (by virtue of the subnet mask being comprised of all ones), any East-West communication between different endpoints 120 and communication between an endpoint 120 and other endpoints 120 or applications on different networks will be routed via it. This provides the security appliance 150 with the unique ability to allow only authorized communication and disallow everything else.

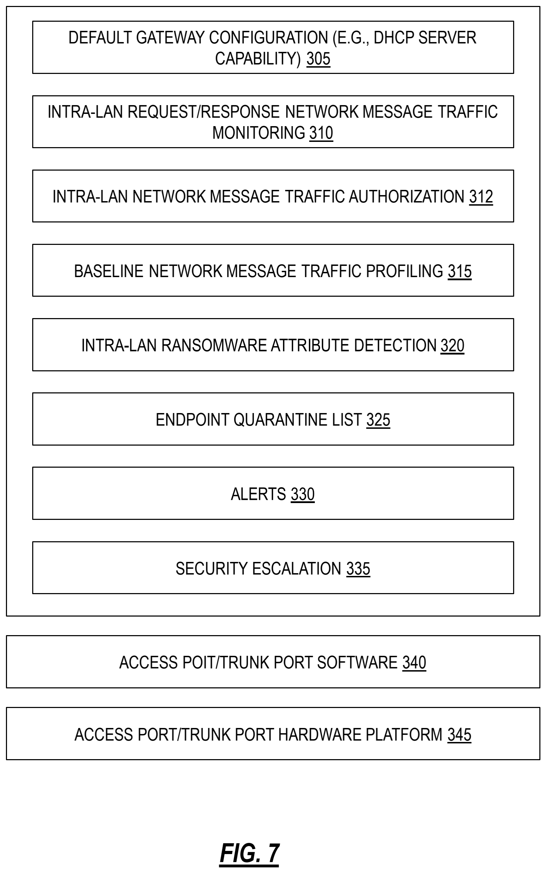

FIG. 7 illustrates a high-level diagram of major functional blocks of the security appliance 150 in one implementation. As previously discussed, the security appliance 150 may be deployed in an access port or in a trunk port associated with VLANs for a number of different endpoint devices 120 (e.g., different laptop computers in a VLAN domain). It thus may be implemented as software stored on a computer memory and executable by a processor associated with an access port or a trunk port. For example, it may be implemented as software deployed with the software 340 and hardware 345 environment associated with an access port or a trunk port. In the example of FIG. 7 the security appliance 150 includes a default gateway configuration unit 305 to set the security appliance as a default gateway as described above (e.g., using a subnet mask of 255.255.255.255). An intra-LAN traffic monitoring unit 310 monitors intra-LAN traffic. This can include monitoring both request and response messages in intra-LAN traffic and detecting irregularities in intra-LAN request/response message traffic. An Intra-LAN network message traffic authorization unit 312 allows only authorized communication between the plurality of endpoints 120 of the shared VLAN environment. For example, it may block unauthorized communication between endpoints. A baseline traffic profiling unit 315 may be optionally included to develop a baseline profile for typical or normal intra-LAN message traffic patterns between endpoints 120. For example, the presence of ransomware may generate unusual amounts or types of traffic in comparison to a baseline profile. An Intra-LAN ransomware attribute detection unit 320 determines if one or more intra-LAN messages have computer code indicative of ransomware, such as computer code files to implement file scanning and encryption.

In the example of FIG. 7 the security appliance 150 includes an endpoint quarantine unit 325 to quarantine compromised endpoints. This may include, for example, generating a list of quarantined endpoint devices that are used to block intra-LAN communication for compromised devices (i.e., to stop the lateral movement of ransomware). An alert unit 330 may be included to generate automated alerts, such as generating alerts for an administrator of an attempted ransomware attack. An optional security escalation unit 335 may be included to implement a security escalation protocol to increase security.

It will be understood that while the security appliance 150 may be deployed on an existing VLAN system, in some implementations it may also be incorporated into new VLAN system components, such as being incorporated into an access port or a trunk port.

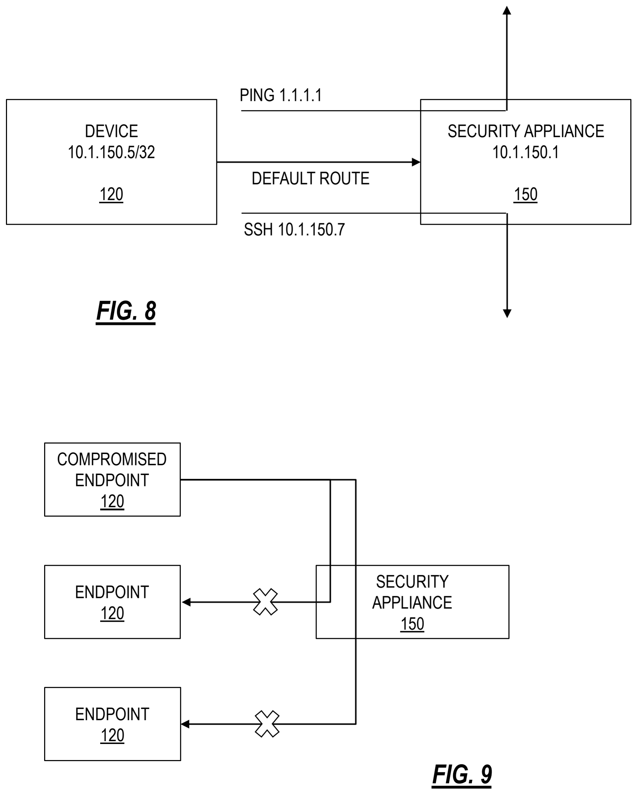

From the perspective of the endpoint 120, other endpoints and applications appear to be in a different IP network. Hence all outbound packets are sent to the default gateway as shown in FIG. 8. In this example, a /32 subnet is illustrated. However, more generally, a /31 or a /30 subnet may be used. Configuring a /32 subnet mask on endpoints 120 forces all outbound network traffic via the security appliance 150. The security appliance 150 allows only authorized communication between endpoints, thereby significantly reducing the attack surface and lateral propagation by malware and ransomware. Detecting attempts by malicious actors to circumvent the protection provided by the security appliance permits quarantining devices which attempt to do so. Rapid quarantining of compromised endpoint devices stops the lateral propagation of ransomware. This, in turn, reduces the spread and potential damage of a ransomware attack.

FIG. 9 illustrates a high-level block diagram of an example of how lateral propagation of ransomware is prevented in accordance with an implementation. In this example, a compromised endpoint is infected with ransomware. The ransomware may, for example, have entered the compromised endpoint 120 in a variety of different ways, such as through a peripheral loT device in communication with the compromised endpoint.

Regardless of how the compromised endpoint 120 became infected with ransomware, the security appliance 150 was earlier set as the default gateway. The security appliance 150 monitors message traffic and quarantines suspicious traffic from the compromised endpoint to other endpoints. This may include, for example, detecting message traffic that has attributes associated with ransomware, such as computer code for file scanning or encryption. It may also optionally include, in some implementations, detecting that message traffic that is unusual in comparison to a baseline profile of normal message traffic.

It is possible that ransomware in a compromised endpoint 120 may attempt to directly communicate with another endpoint 120 and bypass the security appliance 150. However, such an attempt to circumvent the security appliance 150 may still be detected and prevented.

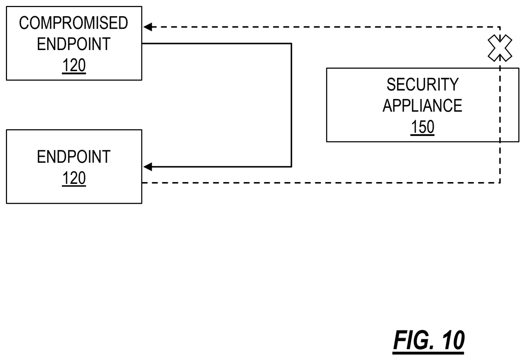

FIG. 10 illustrates an example of how attempts to circumvent protection are detected. A compromised endpoint 120 might, for example, have code in the ransomware that attempts to directly send request messages to another endpoint 120, bypassing the security appliance 150. However, an uncompromised endpoint 120 will attempt to send its response message to the security appliance 150 as the default gateway. The security appliance 150 determines when it has detected a response from an endpoint directed to another endpoint but for which it has not detected a corresponding request. This discrepancy (a response message but no request message) may be used to identify that a compromised endpoint 120 is attempting to circumvent the protection of the security appliance 150.

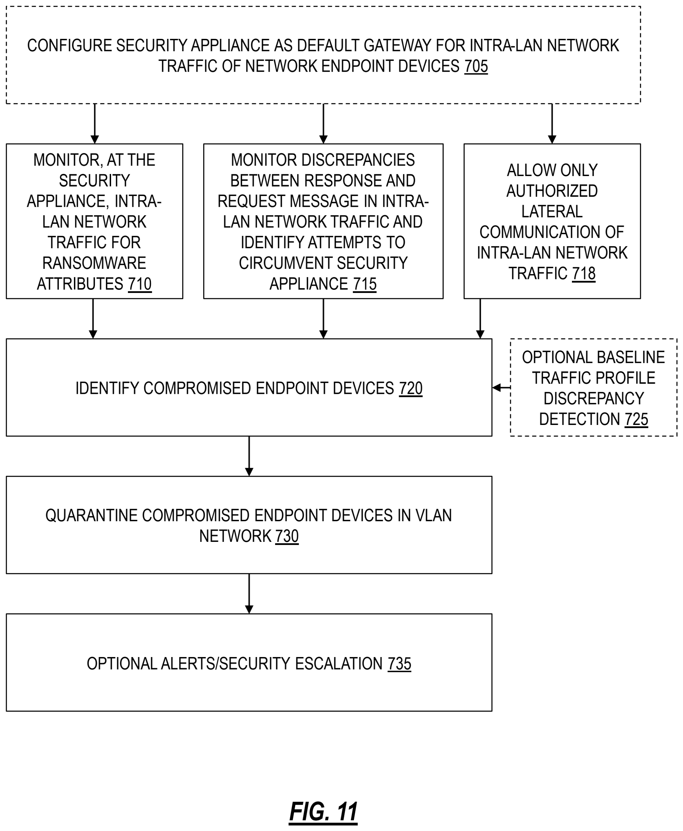

FIG. 11 illustrates a flowchart of a method in accordance with an implementation. A security appliance is configured as the default gateway for Intra-LAN network traffic of endpoint device (step 705). The security appliance monitors intra-LAN network traffic for ransomware attributes (step 710). The security appliance also monitors the intra-LAN message traffic for discrepancies between response and request messages in intra-LAN network traffic and identify attempts to circumvent the security appliance (step 715). The method also includes the security appliance allowing only authorized lateral communication of Intra-LAN network traffic (step 718). Compromised endpoint devices are identified based on the outputs of blocks 710 and 715 (step 720). Optionally, discrepancies with respect to a baseline message traffic profile from step 725 may be considered as an additional factor. Compromised endpoint devices are quarantined (step 730). This may include, for example, placing them on a list of quarantined devices, blocking communication with them, or taking other measures to isolate them. Optional alerts or security escalation may be performed (step 735). Security escalation could, for example, include implementing a security protocol to take a further action to mitigate or minimize the risk of further damage from a ransomware attack.

The security appliance 150 restricts communication in a manner that significantly reduces the attack surface available to the ransomware to exploit vulnerabilities in other endpoints and/or applications and propagate laterally. It detects attempts to circumvent the protection provided by the security appliance. If a compromised endpoint attempts to bypass the default gateway and tries to laterally propagate to another device, this attempt would be detected by the security appliance and appropriate action would be taken. This detection is because the uncompromised endpoint would still send the response packets to the compromised endpoint via the security appliance 150 (due to the /32 default route). The security appliance 150 detects the fact that it has seen a response packet to a request sent by the compromised endpoint, and it alerts the operator in this case. Automatic actions may be taken by the security appliance 150 including quarantining the compromised endpoint so that further lateral propagation is impossible.

### Parent application and the simplified network branch

FIGS. 5 - 11 were described in the parent application, providing a novel approach to isolate the endpoints 120, such as for prevent lateral propagation of ransomware. The present disclosure contemplates using the novel approach to isolate the endpoints 120 for the simplified network branch 12. Note, in FIGS. 5 - 11, the security appliance 150 is shown locally connected to the switch 140, but the network branch 12 contemplates having the security appliance 120 in the cloud 40. Further, the firewall 110 can be optional in all configurations.

### Example switch

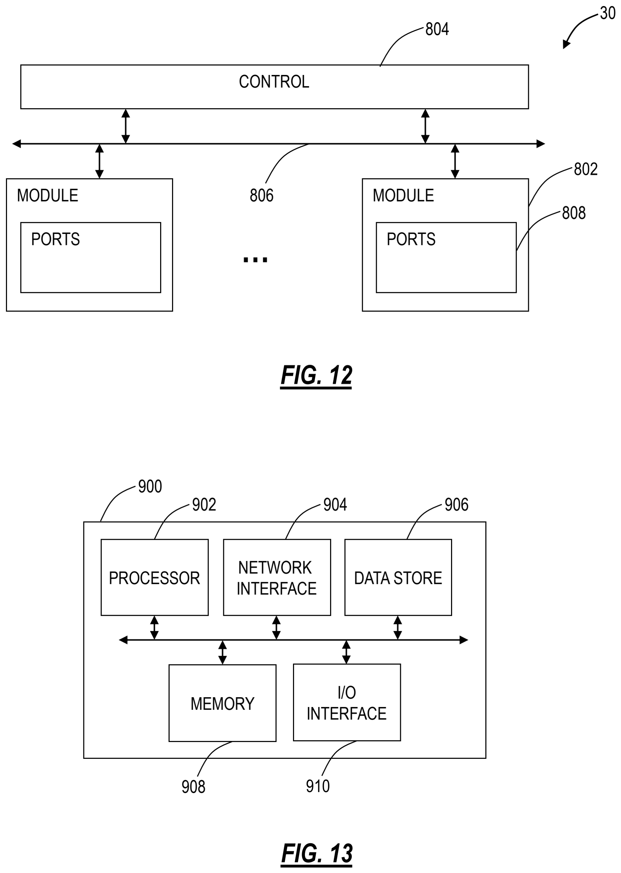

FIG. 12 illustrates a block diagram of an example implementation of a switch 30. Those of ordinary skill in the art will recognize FIG. 12 is a functional diagram in an oversimplified manner, and a practical embodiment may include additional components and suitably configured processing logic to support known or conventional operating features that are not described in detail herein. In an embodiment, the switch 30 can be any network element or other implementations that supports the branch network 12. In this embodiment, the switch 30 includes a plurality of modules 802, 804 interconnected via an interface 706. The modules 802, 804 generally refer to components mounted on a chassis, shelf, etc. of a data switching device. Each of the modules 802, 804 can include numerous electronic devices and/or optical devices mounted on a circuit board along with various interconnects, including interfaces to the chassis, shelf, etc.

Two example modules are illustrated with line modules 802 and a control module 804. The line modules 802 include ports 808, such as a plurality of Ethernet ports. For example, the line module 802 can include a plurality of physical ports disposed on an exterior of the module 802 for receiving ingress/egress connections. Additionally, the line modules 802 can include switching components to form a switching fabric via the interface 806 between all of the ports 808, allowing data traffic to be switched/forwarded between the ports 808 on the various line modules 802. The switching fabric is a combination of hardware, software, firmware, etc. that moves data coming into the switch 30 out by the correct port 808. "Switching fabric" includes switching/routing units in a node; integrated circuits contained in the switching units; and programming that allows switching paths to be controlled. Note, the switching fabric can be distributed on the modules 802, 804, in a separate module (not shown), integrated on the line module 802, or a combination thereof.

The control module 804 can include a microprocessor, memory, software, and a network interface. Specifically, the microprocessor, the memory, and the software can collectively control, configure, provision, monitor, etc. the switch 30. The network interface may be utilized to communicate with an element manager, a network management system, etc. Additionally, the control module 804 can include a database that tracks and maintains provisioning, configuration, operational data, and the like.

Again, those of ordinary skill in the art will recognize the switch 30 can include other components which are omitted for illustration purposes, and that the systems and methods described herein are contemplated for use with a plurality of different network elements with the switch 30 presented as an example type of network element. FIG. 12 is meant to provide a functional view, and those of ordinary skill in the art will recognize actual hardware implementations may vary.

### Example processing device

FIG. 13 illustrates a block diagram of an example processing device 900. The processing device 900 can be part of the switch 30, the security appliance 150, or a stand-alone device. The processing device 900 can include a processor 902 which is a hardware device for executing software instructions. The processor 902 can be any custom made or commercially available processor, a central processing unit (CPU), an auxiliary processor among several processors associated with the processing device 900, a semiconductor-based microprocessor (in the form of a microchip or chipset), or generally any device for executing software instructions. When the processing device 900 is in operation, the processor 902 is configured to execute software stored within the memory, to communicate data to and from the memory, and to generally control operations of the processing device 900 pursuant to the software instructions. The processing device 900 can also include a network interface 904, a data store 906, memory 908, an I/O interface 910, and the like, all of which are communicatively coupled to one another and to the processor 902.

The network interface 904 can be used to enable the processing device 900 to communicate on a data communication network. The network interface 904 can include, for example, an Ethernet module. The network interface 904 can include address, control, and/or data connections to enable appropriate communications on the network. The data store 906 can be used to store data, such as control plane information, provisioning data, Operations, Administration, Maintenance, and Provisioning (OAM&P) data, etc. The data store 906 can include any of volatile memory elements (e.g., random access memory (RAM, such as DRAM, SRAM, SDRAM, and the like)), nonvolatile memory elements (e.g., ROM, hard drive, flash drive, CDROM, and the like), and combinations thereof.

Moreover, the data store 906 can incorporate electronic, magnetic, optical, and/or other types of storage media. The memory 908 can include any of volatile memory elements (e.g., random access memory (RAM, such as DRAM, SRAM, SDRAM, etc.)), nonvolatile memory elements (e.g., ROM, hard drive, flash drive, CDROM, etc.), and combinations thereof. Moreover, the memory 908 may incorporate electronic, magnetic, optical, and/or other types of storage media. Note that the memory 908 can have a distributed architecture, where various components are situated remotely from one another, but may be accessed by the processor 902. The I/O interface 910 includes components for the processing device 900 to communicate with other devices.

In an embodiment, one or more processing devices 900 can be used to implement the cloud 40. Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application required. Centralization gives cloud service providers complete control over the versions of the browser-based and other applications provided to clients, which removes the need for version upgrades or license management on individual client computing devices. The phrase SaaS is sometimes used to describe application programs offered through cloud computing. A common shorthand for a provided cloud computing service (or even an aggregation of all existing cloud services) is "the cloud." The cloud 40 is illustrated herein as an example embodiment of a cloud-based system, and other implementations are also contemplated.

### Processing circuitry and non-transitory computer-readable mediums

Those skilled in the art will recognize that the various embodiments may include processing circuitry of various types. The processing circuitry might include, but are not limited to, general-purpose microprocessors; Central Processing Units (CPUs); Digital Signal Processors (DSPs); specialized processors such as Network Processors (NPs) or Network Processing Units (NPUs), Graphics Processing Units (GPUs); Field Programmable Gate Arrays (FPGAs); Programmable Logic Device (PLD), or similar devices. The processing circuitry may operate under the control of unique program instructions stored in their memory (software and/or firmware) to execute, in combination with certain non-processor circuits, either a portion or the entirety of the functionalities described for the methods and/or systems herein. Alternatively, these functions might be executed by a state machine devoid of stored program instructions, or through one or more Application-Specific Integrated Circuits (ASICs), where each function or a combination of functions is realized through dedicated logic or circuit designs. Naturally, a hybrid approach combining these methodologies may be employed. For certain disclosed embodiments, a hardware device, possibly integrated with software, firmware, or both, might be denominated as circuitry, logic, or circuits "configured to" or "adapted to" execute a series of operations, steps, methods, processes, algorithms, functions, or techniques as described herein for various implementations.

Additionally, some embodiments may incorporate a non-transitory computer-readable storage medium that stores computer-readable instructions for programming any combination of a computer, server, appliance, device, module, processor, or circuit (collectively "system"), each equipped with processing circuitry. These instructions, when executed, enable the system to perform the functions as delineated and claimed in this document. Such non-transitory computer-readable storage mediums can include, but are not limited to, hard disks, optical storage devices, magnetic storage devices, Read-Only Memory (ROM), Programmable Read-Only Memory (PROM), Erasable Programmable Read-Only Memory (EPROM), Electrically Erasable Programmable Read-Only Memory (EEPROM), Flash memory, etc. The software, once stored on these mediums, includes executable instructions that, upon execution by one or more processors or any programmable circuitry, instruct the processor or circuitry to undertake a series of operations, steps, methods, processes, algorithms, functions, or techniques as detailed herein for the various embodiments.

### Conclusion

In this disclosure, including the claims, the phrases "at least one of" or "one or more of" when referring to a list of items mean any combination of those items, including any single item. For example, the expressions "at least one of A, B, or C," "at least one of A, B, and C," "one or more of A, B, or C," and "one or more of A, B, and C" cover the possibilities of: only A, only B, only C, a combination of A and B, A and C, B and C, and the combination of A, B, and C. This can include more or fewer elements than just A, B, and C. Additionally, the terms "comprise," "comprises," "comprising," "include," "includes," and "including" are intended to be open-ended and non-limiting. These terms specify essential elements or steps but do not exclude additional elements or steps, even when a claim or series of claims includes more than one of these terms.

Although operations, steps, instructions, blocks, and similar elements (collectively referred to as "steps") are shown or described in the drawings, descriptions, and claims in a specific order, this does not imply they must be performed in that sequence unless explicitly stated. It also does not imply that all depicted operations are necessary to achieve desirable results. In the drawings, descriptions, and claims, extra steps can occur before, after, simultaneously with, or between any of the illustrated, described, or claimed steps. Multitasking, parallel processing, and other types of concurrent processing are also contemplated. Furthermore, the separation of system components or steps described should not be interpreted as mandatory for all implementations; also, components, steps, elements, etc. can be integrated into a single implementation or distributed across multiple implementations.

While this disclosure has been detailed and illustrated through specific embodiments and examples, it should be understood by those skilled in the art that numerous variations and modifications can perform equivalent functions or achieve comparable results. Such alternative embodiments and variations, even if not explicitly mentioned but that achieve the objectives and adhere to the principles disclosed herein, fall within the spirit and scope of this disclosure. Accordingly, they are envisioned and encompassed by this disclosure and are intended to be protected under the associated claims. In other words, the present disclosure anticipates combinations and permutations of the described elements, operations, steps, methods, processes, algorithms, functions, techniques, modules, circuits, and so on, in any conceivable order or manner-whether collectively, in subsets, or individually-thereby broadening the range of potential embodiments.

## Claims

1. A method for securing a branch network (12) having a plurality of endpoints (24) coupled to an edge switch (30) and a cloud system (40), the method comprising:
responsive to isolating each endpoint (24) of the plurality of endpoints (24) in the branch network (12) at Layer 2, receiving, at the cloud system (40), east-west and north-south traffic flows (50) associated with the plurality of endpoints (24) from the branch network (12);
performing, by the cloud system (40), security processing (150) on the east-west and north-south traffic flows (50); and
routing, by the cloud system (40), the east-west and north-south traffic flows (50) accordingly, subsequent to the security processing (150).

2. The method of claim 1, wherein the security processing (150) is based on one or more security applications (48) selectively configured for the east-west and north-south traffic flows (50).

3. The method of claim 1 or 2, wherein the security processing (150) comprises Secure Service Edge, SSE, or Secure Access Service Edge, SASE, functionality together with one or more additional cloud services.

4. The method of any one of claims 1 to 3, wherein the security processing (150) includes at least one of (1) Network Access Control, NAC, (2) Domain Name System, DNS, Dynamic Host Configuration Protocol, DHCP, and Internet Protocol, IP, Address Management, DD!, (3) Network Detection and Response, NDR, and (4) Security Information and Event Management, SIEM.

5. The method of any one of claims 1 to 4, wherein the branch network (12) excludes on-premises appliances or security services.

6. The method of any one of claims 1 to 5, wherein the east-west and north-south traffic flows (50) are forwarded through the edge switch (30) to the cloud system (40) except inter-virtual local area network, VLAN, Layer 2 Broadcast, Unknown Unicast and Multicast, BUM, traffic, which remains local to the branch network (12).

7. The method of any one of claims 1 to 6, wherein the east-west traffic flows (50) are between two endpoints (24) within the branch network (12) and are transmitted via the edge switch (30) through the cloud system (40).

8. The method of any one of claims 1 to 7, wherein each of the plurality of endpoints (24) is isolated using a subnet mask that places each endpoint (24) in its own subnet, preferably with a /32 Classless Inter-Domain Routing, CIDR, configuration.

9. The method of any one of claims 1 to 8, wherein the east-west and north-south traffic flows (50) are encapsulated Ethernet traffic inside one of a plurality of Layer 3 tunnels (60), such as VXLAN tunnels encrypted via MACSec, established between the edge switch (30) and the cloud system (40).

10. The method of any one of claims 1 to 9, further comprising dynamically routing the east-west and north-south traffic flows (50) among a plurality of cloud-hosted security services (48) based on service-chain policies configured in the cloud system (40).

11. The method of any one of claims 1 to 10, wherein the isolation at Layer 2 comprises assigning to each endpoint (24) a virtual point-to-point link to the edge switch (30) so that intralocal area network, LAN, communications traverse only through the cloud system (40).

12. The method of any one of claims 1 to 11, further comprising detecting compromised endpoints (24) based on monitoring discrepancies between request and response messages in the east-west traffic flows (50).

13. The method of claim 12, further comprising quarantining a compromised endpoint (24) by blocking its traffic within the cloud system (40) and generating an alert (330) to a network administrator.

14. The method of any one of claims 1 to 13, wherein the cloud system (40) performs baseline traffic profiling (315) for each endpoint (24) and identifies deviations indicating ransomware propagation.

15. A cloud system (40) configured to implement the method of any preceding claim, the system comprising:
one or more processing devices (900) forming the cloud system (40);
an interface (60) between an edge switch (30) in the branch network (12) and the cloud system (40); and
program instructions which, when executed by the one or more processing devices (900), cause performance of the steps of any one of claims 1 to 14.
